# EUROPEAN PATENT APPLICATION

(11) **EP 2 175 566 A2**
(43) Date of publication of application: **14.04.2010**
(21) Application number: 09172421.1
(22) Date of filing: 07.10.2009
(51) Int. Cl.: H04B 1/38

(54) **Radio transmitter**

(30) Priority: 07.10.2008 JP 2008260317
(71) Applicant: TDK Corporation, Tokyo 103-8272 (JP)
(72) Inventor: Takahara, Seishi, Chuo-ku Tokyo 103-8272 (JP)
(74) Representative: Grünecker, Kinkeldey, Stockmair & Schwanhäusser Anwaltssozietät

(57) **Abstract**

A radio transmitter includes a radio module alternately repeating a communication mode in which power is consumed to wirelessly transmit predetermined information and a standby mode in which standby power is consumed with no radio transmission performed, and a power supply section supplying power to the radio module. The power supply section includes a secondary battery storing power, a solar battery converting light energy into power, and a charging circuit controlling power supply from the solar battery to the secondary battery and power supply from the secondary battery to the radio module. The charging circuit feeds power from the solar battery to the secondary battery during a period of the standby mode.

## Description

### BACKGROUND OF THE INVENTION

### Field of the Invention

The present invention relates to a radio transmitter used in the field of security and the like.

### Description of the Related Art

Non-contact IC card systems have been available in which an IC (Integrated Circuit) is incorporated into a card such as a credit card or a cash card and particular information is stored in the IC so that the information can be transmitted and received and updated between the card and a read/write apparatus in a non-contact manner. Japanese Patent Laid-Open No. 11-134456 discloses an IC card including a solar battery converting solar energy into power, a secondary battery that is charged by the solar battery, a switch provided between the secondary battery and an IC, and a thin coil receiving magnetic fields to generate an induced electromotive force. The induced electromotive force is received to turn on the switch to allow the secondary battery to supply a power supply voltage to the IC. The IC card enables power to be stably supplied to the IC even if the read/write apparatus generates weak magnetic fields.

However, the above-described IC card supplies power to the IC only when information is read from or written to the IC card. Thus, the power supply configuration of the IC card is not suitable for applications performing radio communication at predetermined cycle intervals and thus constantly consuming power. Known applications constantly consuming power include, for example, a radio transmitter providing the function of automatically locking and unlocking a cellular phone or a personal computer. A radio transmitter of this kind transmits an authentication ID to a cellular phone or a personal computer at predetermined cycle intervals. When the reception intensity of the electric wave transmitted by the radio transmitter at the cycle intervals is equal to or smaller than a threshold, the cellular phone or the personal computer is automatically locked. When the reception intensity is greater than the threshold, the cellular phone or the personal computer is unlocked. The radio transmitter used for such an application performs radio communication at predetermined cycle intervals and thus constantly consumes power. Thus, the radio transmitter needs to be improved to provide as long a radio communication time as possible.

Thus, an object of the present invention is to provide a radio transmitter having a power supply configuration suitable for applications in which radio communication is performed at predetermined cycle intervals to constantly consume power.

### SUMMARY OF THE INVENTION

To accomplish the above-described object, a radio transmitter according to the present invention comprises a radio module alternately repeating a communication mode in which power is consumed to wirelessly transmit predetermined information and a standby mode in which standby power is consumed with no radio transmission performed, and a power supply section supplying power to the radio module. The power supply section comprises a power storage device storing power, a power generation element, and a charging circuit controlling power supply from the power generation element to the power storage device and power supply from the power storage device to the radio module. The charging circuit feeds power from the power generation element to the power storage device during a period of the standby mode. During a period of the standby mode, the power storage device is recharged by the power generation element so as to compensate for the power of the power storage device consumed by the radio module during a period of the communication mode. Thus, the present invention can provide the radio communication apparatus preventing the communication time from being limited.

The present invention can provide a radio transmitter having a power supply configuration suitable for applications in which radio communication is performed at predetermined cycle intervals to constantly consume power.

### BRIEF DESCRIPTION OF THE DRAWINGS

FIG. 1 is a functional block diagram of a radio transmitter and a terminal apparatus according to the present embodiment; and

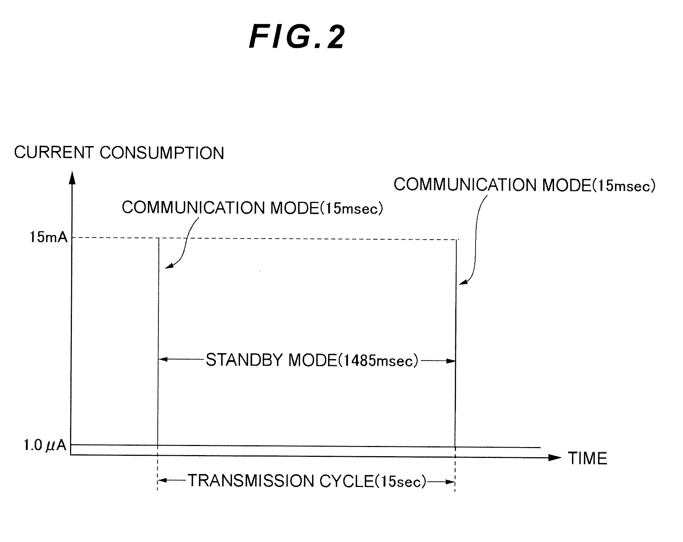

FIG. 2 is a timing chart of intermittent communication according to the present embodiment.

### DESCRIPTION OF THE PREFERRED EMBODIMENT

A preferred embodiment of the present invention will be described below with reference to the drawings.

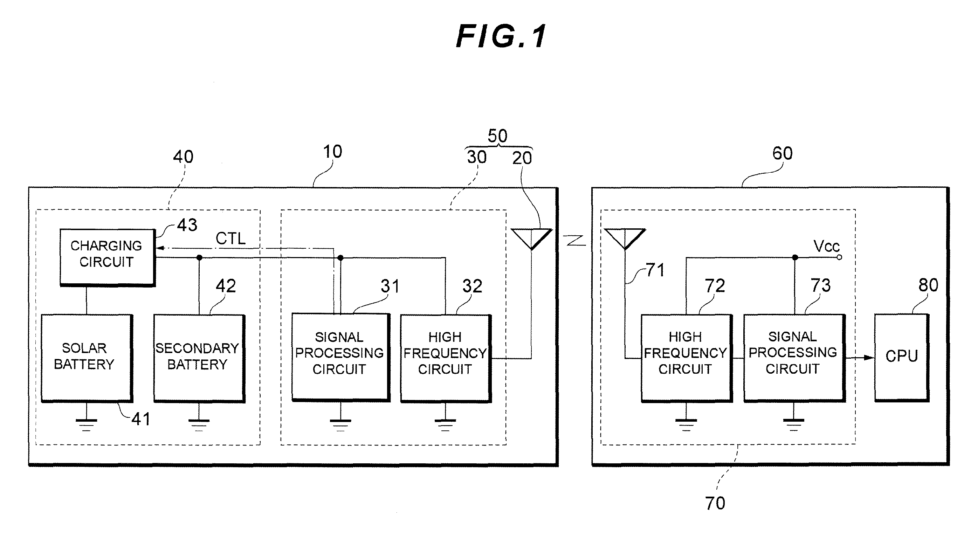

FIG. 1 is a functional block diagram of a radio transmitter 10 and a terminal apparatus 60. The radio transmitter 10 includes an antenna 20, a radio module 50, and a power supply section 40. The radio module 50 includes an antenna 20 and a transmission module 30. The transmission module 30 includes a signal processing circuit 31 and a high frequency circuit 32. The power supply section 40 includes a solar battery 41, a secondary battery 42, and a charging circuit 43.

The signal processing circuit 31 is composed of a CPU and a memory IC to perform control for reducing power consumption, a process of outputting an ID number, and the like. The ID number and a communication format are pre-stored in the memory IC. The ID number is unique identification information assigned to the radio transmitter for unique identification. The communication format conforms to a predetermined communication protocol (for example, a power-saving radio communication protocol adapted for a 400 MHz band). Any of various memories such as a nonvolatile memory and a volatile memory is applicable as the memory IC. The CPU reads the communication format from the memory IC together with the ID number. The CPU intermittently and periodically outputs a modulation signal of a predetermined interface format (for example, a UART serial interface format) modulated at a predetermined transfer rate (for example, 9,600 bps), to the high frequency circuit 32. For example, an 8-bit microcomputer may be used as the CPU.

The signal processing circuit 31 performs intermittent communication as the control for reducing the power consumption. In the intermittent communication, during a predetermined transmission cycle (for example, a 15-second cycle), the ID number is output in a predetermined communication format only during a transmission period (for example, 15 msec) in which the radio transmitter operates in a communication mode. During a sleep period (for example, 1485 msec) corresponding to the remaining period of the transmission cycle and during which the radio transmitter operates in a standby mode (sleep mode), the operation of the signal processing circuit 31 and the high frequency circuit 32 is set to a standby state. The signal processing circuit 31 and the high frequency circuit 32 alternately repeats the communication mode and the standby mode to reduce the power consumption of the secondary battery 42.

The high frequency circuit 32 is composed of passive components such as a chip inductor, a chip capacitor, and a chip resistor, and semiconductor elements such as transistors. The high frequency circuit 32 receives the modulation signal from the signal processing circuit 31. The high frequency circuit 32 then modulates the signal into a transmission signal (for example, a binary FSK modulation signal with a 300-MHz band) containing the ID number of the radio transmitter 10 according to the communication format. The antenna 20 converts the transmission signal generated by the high frequency circuit 32 into an electromagnetic wave, and radiates the electromagnetic wave. The electromagnetic wave radiated by the antenna 20 is designed so as to conform to weak radio standards for a basic frequency of 315 MHz.

The solar battery 41 is a power generation element converting light energy (the light energy of sunlight or illumination light) into DC power. The components (antenna 20, transmission module 30, and power supply section 40) of the radio transmitter 10 are housed in an external case composed of a light transmissive material (for example, a white ABS material of thickness about 0.2 mm). Thus, the light energy is efficiently absorbed by the solar battery 41. The power generation element is not limited to the solar battery 41. The power generation element may be a photovoltaic element converting light energy into electric energy, a vibrational power generation element converting vibrational energy into electric energy, a thermoelectric conversion element converting thermal energy into electric energy, or an electromagnetic inductive power generation element converting electromagnetic energy into electric energy.

The secondary battery 42 is a power storage device storing power supplied to the signal processing circuit 31 and the high frequency circuit 32. The secondary battery 42 is, for example, a lithium ion battery outputting a rated voltage of 3 V DC. Although depending on the minimum operation voltage levels of the signal processing circuit 31 and the high frequency circuit 32, power consumed from the secondary battery 42 is between about 1.8 V and 3.3 V. The power storage device is not limited to the secondary battery 42 but may be, for example, a capacitor.

The charging circuit 43 controls the supply of power from the solar battery 41 to the secondary battery 42 and the supply of power from the secondary battery 42 to the transmission module 30. The charging circuit 43 provides the function of preventing the possible counter flow of current from the secondary battery 42 to the solar battery 41 and the function of monitoring the terminal voltage of the secondary battery 42 to stop charging the secondary battery 42 when the secondary battery 42 is overcharged and to stop over-discharge of the secondary battery 42 when the secondary battery 42 is over-discharged. Specifically, the charging circuit 43 continuously increases the transmission cycle or temporarily stops the radio communication until the secondary battery 42 is sufficiently charged.

The charging circuit 43 controls the above-described power supplies based on the theoretical value of a control signal CTL output by the signal processing circuit 31. As described above, the transmission module 30 constantly performs the intermittent communication in which the communication mode and the standby mode are alternately repeated. During the transmission period in which the transmission module 30 operates in the communication mode, the transmission module 30 controls the theoretical value of the control signal CTL so as to allow operation power (power required for the radio transmission) to be fed from the secondary battery 42 to the transmission module 30, while preventing charge power from being fed from the solar battery 41 to the secondary battery 42. During the sleep period in which the transmission module 30 operates in the standby mode, the transmission module 30 controls the theoretical value of the control signal CTL so as to allow standby power (power consumed during standby) to be fed from the secondary battery 42 to the transmission module 30, while allowing the charge voltage to be fed from the solar battery 41 to the secondary battery 42. Thus, during the standby mode, the secondary battery 42 can be recharged by the solar battery 41 so as to compensate for the power of the secondary battery 42 consumed by the transmission module 30 during the communication mode. Furthermore, the impedance of the secondary battery 42 is lower during the standby mode period than during the communication mode period. Thus, the recharging is easier than the constant charging of the secondary battery 42.

It is assumed that a current of 15 mA is consumed in the communication mode, while a current of 1.0 µA is consumed in the standby mode. Then, the average current consumption during intermittent communication with a duty of 0.1 % is 16 µA. Experimental data indicating the relationship between the light reception illuminance and power generation current from solar battery 41 was acquired. Then, during normal use (for example, when the radio transmitter 10 is placed in a breast pocket) in an office, an illuminance of about 100 Lux was obtained. The power generation current from the solar battery 41 resulting from this level of illuminance is about 16 µA. By placing the radio transmitter 10 in an environment in which an appropriate illuminance is obtained, the power consumption of the radio transmitter 10 (the sum of the operation power consumed during the communication mode and the standby power consumed during the standby mode) can be sufficiently compensated for by the solar battery 41. Thus, the present embodiment can provide the radio transmitter 10 eliminating the need to replace the batteries and preventing the communication time from being limited.

The terminal apparatus 60 is, for example, an electronic apparatus such as a cellular phone or a personal computer which provides a radio communication function. The terminal apparatus 60 includes a radio module 70 and a CPU 80. The radio module 70 includes an antenna 71, a high frequency circuit 72, and a signal processing circuit 73. The ID number contained in the transmission signal radiated by the radio transmitter 10 as a radio wave is received by the antenna 71. The ID number is then demodulated by the high frequency circuit 72 and decoded by the signal processing circuit 73. The resulting ID number is output to the CPU 80 in the predetermined interface format (for example, the UART serial interface format). The CPU 80 authenticates the radio transmitter 10 based on the ID number received by the radio module 70. For example, if the terminal apparatus 60 is a cellular phone, when the user carrying the radio transmitter 10 moves away from the terminal apparatus 60 by at least a given distance, the terminal apparatus 60 is locked. When the user carrying the radio transmitter 10 moves back to a position located at a given distance or shorter from the terminal apparatus 60, the terminal apparatus 60 is unlocked.

In the radio transmitter 10 according to the present embodiment, the during the standby mode, the secondary battery 42 can be recharged by the solar battery 41 so as to compensate for the power of the secondary battery 42 consumed by the radio module 50 during the communication mode. Thus, the present embodiment can provide the radio transmitter 10 preventing the communication time from being limited.
The present application is based on Japanese priority application No. 2008-260317 filed on October 7, 2008, the entire content of which is hereby incorporated by reference.

## Claims

1. A radio transmitter comprising:
a radio module alternately repeating a communication mode in which power is consumed to wirelessly transmit predetermined information and a standby mode in which standby power is consumed with no radio transmission performed; and
a power supply section supplying power to the radio module,
wherein the power supply section comprises a power storage device storing power, a power generation element, and a charging circuit controlling power supply from the power generation element to the power storage device and power supply from the power storage device to the radio module, and
the charging circuit feeds power from the power generation element to the power storage device during a period of the standby mode.

2. The radio transmitter according to claim 1, wherein during the period of the standby mode, the charging circuit recharges the power storage device from the power generation element so as to compensate for the power of the power storage device consumed by the radio module during a period of the communication mode.
